# EUROPÄISCHE PATENTSCHRIFT

(11) **EP 3 523 052 B1**
(45) Veröffentlichungstag und Bekanntmachung des Hinweises auf die Patenterteilung: **13.05.2020**
(21) Anmeldenummer: 17809256.5
(22) Anmeldetag: 01.12.2017
(51) Int. Cl.: B05B 12/14, B41J 2/165, B41J 3/407, B05B 15/55, B05B 15/555, B05B 15/58, B05B 15/531, B05B 1/16, B41J 3/54, B05B 13/04

(54) **BESCHICHTUNGSEINRICHTUNG UND ENTSPRECHENDES BESCHICHTUNGSVERFAHREN**
COATING DEVICE AND CORRESPONDING COATING METHOD
DISPOSITIF DE REVÊTEMENT ET MÉTHODE DE REVÊTEMENT CORRESPONDANTE

(30) Priorität: 14.12.2016 DE 102016014955
(43) Veröffentlichungstag der Anmeldung: 14.08.2019
(60) Teilanmeldung: 20157088.4
(73) Patentinhaber: Dürr Systems AG, 74321 Bietigheim-Bissingen (DE)
(72) Erfinder: FRITZ, Hans-Georg, 73760 Ostfildern (DE); WÖHR, Benjamin, 74363 Eibensbach (DE); KLEINER, Marcus, 74354 Besigheim (DE); BUBEK, Moritz, 71640 Ludwigsburg (DE); BEYL, Timo, 74354 Besigheim (DE); HERRE, Frank, 71739 Oberriexingen (DE); SOTZNY, Steffen, 71720 Oberstenfeld (DE)
(74) Vertreter: v. Bezold & Partner Patentanwälte - PartG mbB
(86) Internationale Anmeldenummer: PCT/EP2017/081108
(87) Internationale Veröffentlichungsnummer: WO 2018/108568

(56) Entgegenhaltungen:
- DE-A1-102012 005 087
- JP-A- 2013 067 179

## Beschreibung

Die Erfindung betrifft eine Beschichtungseinrichtung zur Beschichtung von Bauteilen mit einem Beschichtungsmittel, insbesondere zur Lackierung von Kraftfahrzeugkarosseriebauteilen mit einem Lack. Weiterhin betrifft die Erfindung ein entsprechendes Betriebsverfahren.

Zur Serienlackierung von Kraftfahrzeugkarosseriebauteilen werden als Applikationsgerät üblicherweise Rotationszerstäuber eingesetzt, die jedoch den Nachteil eines beschränkten Auftragswirkungsgrades haben, d.h. nur ein Teil des applizierten Lacks lagert sich auf den zu beschichtenden Bauteilen ab, während der Rest des applizierten Lacks als sogenannter Overspray entsorgt werden muss.

Eine neuere Entwicklungslinie sieht dagegen als Applikationsgerät sogenannte Druckköpfe vor, wie beispielsweise aus DE 10 2013 002 412 A1, US 9,108,424 B2 und DE 10 2010 019 612 A1 bekannt sind. Derartige Druckköpfe geben im Gegensatz zu den bekannten Rotationszerstäubern keinen Sprühnebel des zu applizierenden Lacks ab, sondern einen räumlich eng begrenzten Lackstrahl, der sich nahezu vollständig auf dem zu lackierenden Bauteil niederschlägt, so dass nahezu kein Overspray entsteht.

Die bekannten Druckköpfe sind jedoch nicht auf einen Farbwechsel ausgelegt und eignen sich deshalb in der bisherigen Form nur sehr eingeschränkt zur Serienlackierung von Kraftfahrzeugkarosseriebauteilen in einer Lackieranlage.

Darüber hinaus kann es in Lackierpausen passieren, dass der Lack in dem Druckkopf antrocknet oder austrocknet, was im schlimmsten Fall zu einem Funktionsverlust des Druckkopfs führen kann.

Ferner ist zum allgemeinen technischen Hintergrund der Erfindung hinzuweisen auf DE 601 25 369 T2, DE 10 2010 019 612 A1, WO 2005/016556 A1, DE 698 36 128 T2, DE 10 2004 044 655 A1, DE 10 2013 205 171 A1, DE 600 01 898 T2, EP 1 946 846 A2, DE 10 2013 002 412 A1 und DE 689 24 202 T2.

Zum technischen Hintergrund der Erfindung ist auch hinzuweisen auf JP 2013-067179 A.

Schließlich offenbart DE 10 2012 005 087 A1 eine Beschichtungseinrichtung gemäß dem Oberbegriff von Anspruch 1. Diese bekannte Beschichtungseinrichtung ist jedoch noch nicht vollständig befriedigend.

Der Erfindung liegt deshalb die Aufgabe zugrunde, eine entsprechend verbesserte Beschichtungseinrichtung bzw. ein entsprechend verbessertes Beschichtungsverfahren mit einem Druckkopf als Applikationsgerät zu schaffen.

Diese Aufgabe wird durch eine erfindungsgemäße Beschichtungseinrichtung bzw. ein erfindungsgemäßes Beschichtungsverfahren gemäß den unabhängigen Ansprüchen gelöst.

Die erfindungsgemäße Beschichtungseinrichtung dient vorzugsweise zur Lackierung von Kraftfahrzeugkarosseriebauteilen mit einem Lack und ist konstruktiv entsprechend ausgelegt.

Es besteht jedoch im Rahmen der Erfindung alternativ auch die Möglichkeit, dass andere Typen von Bauteilen beschichtet werden.

Darüber hinaus muss es sich bei dem applizierten Beschichtungsmittel nicht notwendigerweise um Lack (z.B. Wasserlack, lösemittelbasierter Lack, Klarlack, Basislack, etc.) handeln. Vielmehr kann die erfindungsgemäße Beschichtungseinrichtung auch zur Applikation von anderen Beschichtungsmitteln ausgelegt sein, wie beispielsweise zur Applikation von Klebstoffen, Dämmstoffen, Dichtstoffen, Primern, etc., um nur einige Beispiele zu nennen.

Die erfindungsgemäße Beschichtungseinrichtung weist zunächst in Übereinstimmung mit dem Stand der Technik mindestens einen mehrachsigen Beschichtungsroboter auf, der vorzugsweise eine serielle Roboterkinematik, mindestens sechs oder sieben bewegliche Roboterachsen und eine mehrachsige Roboterhandachse aufweist. Derartige Beschichtungsroboter sind an sich aus dem Stand der Technik bekannt und müssen deshalb nicht näher beschrieben werden.

Darüber hinaus weist die erfindungsgemäße Beschichtungseinrichtung in Übereinstimmung mit dem Stand der Technik mindestens einen ersten Druckkopf auf, um das Beschichtungsmittel auf die Oberfläche des zu beschichtenden Bauteils zu applizieren. Der Druckkopf weist mindestens eine Düse auf, um einen Beschichtungsmittelstrahl des Beschichtungsmittels auf die Oberfläche des zu beschichtenden Bauteils abzugeben. Der im Rahmen der Erfindung verwendete Begriff eines Druckkopfs ist also zu unterscheiden von den üblicherweise als Applikationsgerät verwendeten Zerstäubern, die keinen räumlich eng begrenzten Beschichtungsmittelstrahl abgeben, sondern einen Sprühnebel des Beschichtungsmittels. Ansonsten ist der im Rahmen der Erfindung verwendete Begriff eines Druckkopfs allgemein zu verstehen, so dass verschiedene Konstruktionsprinzipien bekannter Druckköpfe eingesetzt werden können. Vorzugsweise ist der Druckkopf jedoch ähnlich aufgebaut zu den Druckköpfen, die beispielsweise in DE 10 2013 002 412 A1, US 9,108,424 B2 und DE 10 2010 019 612 A1 beschrieben sind.

Weiterhin ist zu erwähnen, dass der Druckkopf mindestens ein Druckkopfventil aufweist, um die Beschichtungsmittelabgabe durch die Düse zu steuern. Dieses Druckkopfventil kann beispielsweise einen elektrisch ansteuerbaren Magnetaktor aufweisen, um die Ventilstellung einzustellen, wobei der Aufbau und die Funktionsweise eines solchen Druckkopfventils an sich aus dem Stand der Technik bekannt sind und deshalb nicht näher beschrieben werden müssen.

Der Druckkopf ist hierbei an dem Beschichtungsroboter montiert und wird von dem Beschichtungsroboter programmgesteuert über die Oberfläche des zu beschichtenden Bauteils geführt, was ebenfalls aus dem Stand der Technik bekannt ist.

Gemäß der Erfindung ist an dem Beschichtungsroboter zusätzlich zu dem ersten Druckkopf mindestens ein zweiter Druckkopf montiert, wobei die beiden Druckköpfe jeweils ein bestimmtes Beschichtungsmittel applizieren, um ohne einen Druckkopfaustausch einen Farbwechsel zu ermöglichen. Der erste Druckkopf kann dann beispielsweise schwarzen Lack applizieren, wohingegen der zweite Druckkopf beispielsweise silbernen Lack applizieren kann.

Erfindungsgemäß sind dagegen an dem Beschichtungsroboter mindestens zwei Druckköpfe montiert, die abwechselnd betrieben werden können. Dies ermöglicht auch einen sogenannten A/B-Betrieb, in dem der Druckkopf A Beschichtungsmittel appliziert, während der andere Druckkopf B mit einem Spülmittel gespült und ggf. mit einem andersfarbigen Beschichtungsmittel angedrückt wird. Anschließend wird dann mit dem Druckkopf B Beschichtungsmittel appliziert, während der Druckkopf A mit Spülmittel gespült und ggf. mit einem andersfarbigen Beschichtungsmittel angedrückt wird. Dieser A/B-Betrieb ermöglicht bei einem Farbwechsel eine unterbrechungsfreie Beschichtung, da ohne Pause von dem Druckkopf A auf den Drucckopf B bzw. umgekehrt umgeschaltet werden kann. Die zum Spülen und Andrücken des Druckkopfs erforderliche Zeit führt hierbei also nicht zu einer Unterbrechung des Beschichtungsbetriebs, was vorteilhaft ist.

Weiterhin ist vorgesehen, dass die mindestens zwei Druckköpfe an dem Beschichtungsroboter durch jeweils einen separaten Beschichtungsmittelkreis mit Beschichtungsmittel versorgt werden. Dies bietet den Vorteil, dass im Gegensatz zu dem vorstehend beschriebenen A/B-Betrieb kein separates A/B-Ventil bzw. eine entsprechende Ventilanordnung erforderlich ist. Allerdings müssen die beiden Beschichtungsmittelkreise dann durch den Beschichtungsroboter hindurch bis zu den beiden Druckköpfen geführt werden.

Es wurde bereits vorstehend kurz erwähnt, dass an dem Beschichtungsroboter mindestens zwei Druckköpfe montiert sind, die wahlweise betrieben werden können. Dies bietet den Vorteil, dass die einzelnen Druckköpfe jeweils nur von einem Beschichtungsmittel durchströmt werden. Die Anzahl der an dem Beschichtungsroboter montierten Druckköpfe ist deshalb vorzugsweise größer als 2, und kleiner als 6. Die einzelnen Druckköpfe sind dann vorzugsweise an eine separate Beschichtungsmittelzuleitung angeschlossen, so dass die Beschichtungsmittelzuleitungen jeweils nur von dem zugehörigen Beschichtungsmittel durchströmt werden.

Bei der Erfindung besteht auch die Möglichkeit, dass einige Druckköpfe für häufig verwendete Beschichtungsmittel ("high runner") vorgesehen sind und dann jeweils nur von dem zugehörigen häufig verwendeten Beschichtungsmittel durchströmt werden, ohne dass ein Farbwechsel an diesen Druckköpfen vorgesehen ist. Ein anderer Teil der Druckköpfe oder sogar nur ein einziger Druckkopf ist dagegen zur Applikation von selten verwendeten Beschichtungsmitteln ("low runner") vorgesehen und ermöglicht dabei einen Farbwechsel zwischen den verschiedenen selten verwendeten Beschichtungsmitteln. Dies bietet den Vorteil, dass bei den häufig verwendeten Beschichtungsmitteln überhaupt kein Farbwechsel mit entsprechenden Verlusten erforderlich ist. Bei der Applikation der selten verwendeten Beschichtungsmittel ist dann zwar ein Farbwechsel mit entsprechenden Verlusten erforderlich, allerdings fällt dies kaum ins Gewicht, da die mit Farbwechselverlusten verbundenen seltenen Beschichtungsmittel eben nur selten verwendet werden.

Darüber hinaus kann die erfindungsgemäße Beschichtungseinrichtung eine Zeitsteuerung aufweisen, um die Druckköpfe zeitgesteuert zu spülen. Beispielsweise kann die Zeitsteuerung jeweils nach Ablauf eines vorgegebenen Spülintervalls einen Spülvorgang auslösen, beispielsweise nach einem Spülintervall von 1h, 2h oder 4h. Darüber hinaus besteht die Möglichkeit, dass die Zeitsteuerung jeweils nach Ablauf einer vorgegebenen Stillstandsdauer eines die zu beschichtenden Bauteile fördernden Förderers einen Spülvorgang auslöst, beispielsweise nach einer Stillstandsdauer von mehr als 10min, 20min, 30min oder 1h. Diese beiden Varianten einer Zeitsteuerung können jeweils allein oder in Kombination miteinander eingesetzt werden.

Darüber hinaus umfasst die erfindungsgemäße Beschichtungseinrichtung vorzugsweise eine Reinigungsvorrichtung, um die montierten oder demontierten Druckköpfe zu reinigen. Aus dem Stand der Technik sind sogenannte Zerstäuberreinigungsgeräte bekannt, in die der Beschichtungsroboter den montierten Rotationszerstäuber einführt, wobei der Rotationszerstäuber dann innerhalb der Reinigungsvorrichtung mit einer Reinigungsflüssigkeit (z.B. Verdünner) besprüht wird, um den Rotationszerstäuber von außen zu reinigen. Die erfindungsgemäße Reinigungsvorrichtung kann ähnlich aufgebaut sein, wobei die Reinigungsvorrichtung natürlich an die andere Außenkontur des Druckkopfs und an fehlende Funktionen wie z.B. Lenkluft angepasst ist.

Die Reinigungsvorrichtung ist vorzugsweise getrennt von dem Beschichtungsroboter ortsfest angeordnet, wobei die Reinigungsvorrichtung innerhalb des Arbeitsbereichs des Beschichtungsroboters angeordnet sein muss, damit der Beschichtungsroboter den Druckkopf in die Reinigungsvorrichtung einführen kann.
Die Erfindung ermöglicht vorzugsweise eine sehr kurze Farbwechselzeit, die vorzugsweise kürzer ist als 1h, 20min, 10min, 1min, 30s, 10s oder sogar kürzer als 5s.

Bei einer Stop-and-Go-Förderung der Kraftfahrzeugkarosseriebauteile durch die Lackieranlage ist die Farbwechselzeit vorzugsweise kürzer als die Wechselzeit zwischen zwei aufeinanderfolgenden Kraftfahrzeugkarosseriebauteilen, d.h. kürzer als die Förderdauer der Kraftfahrzeugkarosseriebauteile zwischen zwei Positionen.

Bei einer kontinuierlichen Line-Tracking-Förderung der Kraftfahrzeugkarosseriebauteile durch die Lackieranlage ist die Farbwechselzeit dagegen vorzugsweise kürzer als der zeitliche Abstand zwischen zwei aufeinanderfolgenden Kraftfahrzeugkarosseriebauteilen. Im A/B-Betrieb kann die Farbwechselzeit auf die Zeitdauer eines Karossentaktes ausgedehnt werden.

Vorteilhaft ist weiterhin der geringe Beschichtungsmittelverlust bei einem Farbwechsel, wobei der Beschichtungsmittelverlust vorzugsweise kleiner ist als 5l, 2l, 200ml, 20ml, 10ml, 5ml oder sogar kleiner als 2ml.

Darüber hinaus entsteht bei einem Farbwechsel vorzugsweise ein sehr geringer Spülmittelbedarf, der vorzugsweise kleiner ist als 300ml, 250ml, 200ml, 100ml, 50ml, 20ml oder sogar kleiner als 10ml.

Allgemein ist zu bemerken, dass die Druckköpfe vorzugsweise einen eng begrenzten Beschichtungsmittelstrahl abgeben im Gegensatz zu einem Sprühnebel, wie es bei herkömmlichen Zerstäubern (z.B. Rotationszerstäubern) der Fall ist.

In einer Variante der Erfindung geben die Druckköpfe jeweils einen Tröpfchenstrahl ab, der aus mehreren Tröpfchen besteht, die in Strahllängsrichtung voneinander getrennt sind im Gegensatz zu einem in Strahllängsrichtung zusammenhängenden Beschichtungsmittelstrahl.

Alternativ besteht jedoch auch die Möglichkeit, dass die Druckköpfe jeweils einen in Strahllängsrichtung zusammenhängenden Beschichtungsmittelstrahl abgeben im Gegensatz zu dem vorstehend erwähnten Tröpfchenstrahl.

Bei der erfindungsgemäßen Beschichtungseinrichtung wird der Beschichtungsmitteldruck vorzugsweise mit einer sehr geringen Schwankungsbreite kontrolliert, wobei die Schwankungsbreite des Beschichtungsmitteldrucks vorzugsweise kleiner ist als ±500mbar, ±200mbar, ±100mbar oder ±50mbar.

Ferner ist zu erwähnen, dass die Druckköpfe vorzugsweise einen sehr hohen Auftragswirkungsgrad von mindestens 80%, 90%, 95% oder 99% aufweisen, so dass im Wesentlichen das gesamte applizierte Beschichtungsmittel vollständig auf dem Bauteil abgelagert wird, ohne dass Overspray entsteht. Die Druckköpfe sind also im Rahmen der Erfindung vorzugsweise im Wesentlichen Overspray-frei.

Darüber hinaus ist zu bemerken, dass die Druckköpfe vorzugsweise eine ausreichend hohe Flächenbeschichtungsleistung haben, um beispielsweise Kraftfahrzeugkarosseriebauteile zu lackieren. Die Flächenbeschichtungsleistung beträgt deshalb vorzugsweise mindestens 0,5m²/min, 1m²/min, 2m²/min oder sogar 3m²/min.

Ferner ist auch zu bemerken, dass der Volumenstrom des applizierten Beschichtungsmittels und damit die Austrittsgeschwindigkeit des Beschichtungsmittels vorzugsweise so eingestellt werden, dass das Beschichtungsmittel nach dem Auftreffen auf das Bauteil nicht von dem Bauteil abprallt. Weiterhin soll die Auftreffgeschwindigkeit des Beschichtungsmittelstrahls so ausgelegt sein, dass das Beschichtungsmittel nicht in die darunter liegende Lackschicht eindringt, sondern sich das Beschichtungsmittel auf dieselbe legt (schichtet). Die Austrittsgeschwindigkeit des Beschichtungsmittels liegt deshalb vorzugsweise im Bereich von 5m/s bis 30m/s.
Hierbei liegt der Applikationsabstand vorzugsweise im Bereich von 4mm bis 200mm.

Schließlich ist noch zu erwähnen, dass die Ansteuerung des mindestens einen Druckkopfventils vorzugsweise durch einen elektrisch ansteuerbaren Aktor erfolgt, beispielsweise durch einen Magnetaktor oder einen Piezoaktor, wobei derartige Aktoren an sich aus dem Stand der Technik bekannt sind und deshalb nicht näher beschrieben werden müssen.

Darüber hinaus ist zu erwähnen, dass die Erfindung nicht nur Schutz beansprucht für die vorstehend beschriebene erfindungsgemäße Beschichtungseinrichtung. Vielmehr beansprucht die Erfindung auch Schutz für ein entsprechendes Beschichtungsverfahren, wobei sich die meisten Verfahrensschritte bereits aus der vorstehenden Beschreibung ergeben, so dass auf eine separate Beschreibung der einzelnen Verfahrensschritte verzichtet werden kann.

Ergänzend ist jedoch zu erwähnen, dass bei einem Farbwechsel von einem lösemittelbasierten Lack zu einem Wasserlack vorzugsweise zunächst ein Lösemittel-Spülmittel, dann optional ein Trennmittel (z.B. Alkohol) und dann ein wasserbasiertes Spülmittel verwendet wird. Bei einem umgekehrten Wechsel von einem Wasserlack zu einem lösemittelbasierten Lack muss diese Reihenfolge dann natürlich entsprechend umgekehrt werden.

Weiterhin besteht im Rahmen der Erfindung die Möglichkeit, dass sequenziell mit unterschiedlichen Spülmitteln gespült wird, beispielsweise mit einem zunehmenden Gehalt von organischen Lösemitteln.

Ferner besteht auch die Möglichkeit, dass zum Spülen ein Universalspülmittel verwendet wird, das sowohl zum Ausspülen von wasserbasiertem Lack als auch zum Ausspülen von Lösemittellack verwendet wird.

Darüber hinaus kann das Spülen unterstützt werden durch Einleiten von Pulsluft und/oder eines Aerosol aus Druckluft und Spülmittel in den Druckkopf und/oder in das Reinigungsgerät.

Darüber hinaus ist zu erwähnen, dass es sich bei dem Spülmittel auch um ein VOC-freies (VOC: Volatile Organic Compound) handeln kann.

Darüber hinaus ist es vorteilhaft, wenn bei einem Spülvorgang die Restflüssigkeiten (z.B. altes Beschichtungsmittel, Spülmittelreste, etc.) aufgefangen und entsorgt werden, damit eine Verunreinigung der Beschichtungseinrichtung vermieden wird.

Vorstehende Ausführungen gelten sowohl für das Spülen der medienführenden Bereiche im Inneren des Druckkopf bzw. der Zuleitungen zum Druckkopf, als auch für den Reinigungs- bzw. Spülvorgang des Druckkopfs im Reinigungsgerät.

Darüber hinaus ist es vorteilhaft, wenn der Druckkopf nach einem Spülvorgang mit dem neuen Beschichtungsmittel angedrückt wird, damit er dann sofort zur Applikation zur Verfügung steht. Bei diesem Andrücken wird vorzugsweise eine definierte Menge des neuen Beschichtungsmittels aus den Düsen des Druckkopfs herausgedrückt, wobei die herausgedrückte Menge des Beschichtungsmittels dann vorzugsweise aufgefangen und entsorgt wird. In der Praxis erfolgt das Andrücken vermutlich erst vor dem Applizieren.

Es wurde bereits vorstehend erwähnt, dass die Ansteuerung des Druckkopfventils durch einen Magnetaktor erfolgen kann. Derartige Magnetaktoren verfügen üblicherweise über eine elektrische Spule, die auf ein Spulenrohr aufgewickelt ist, wobei in dem Spulenrohr ein Anker beweglich angeordnet ist und in Abhängigkeit von der Bestromung der Spule verschoben wird, um die Düse zu schließen bzw. zu öffnen. Hierbei besteht die Möglichkeit, dass Beschichtungsmittel in das Spulenrohr eintreten kann. Bei einem Spülvorgang wird deshalb vorzugsweise auch das Spulenrohr des Magnetaktors gespült. Hierbei besteht die Möglichkeit, dass das Spülmittel durch einen separaten Spülanschluss in Richtung der Düse durch das Spulenrohr geleitet wird. Es besteht jedoch auch umgekehrt auch die Möglichkeit, dass das Spülmittel in entgegengesetzter Richtung durch das Spulenrohr strömt, d.h. zu einem separaten Spülauslass. Darüber hinaus können diese beiden Spülungsarten auch abwechselnd miteinander kombiniert werden.

Weiterhin kann der Druckkopf durch die Rückführung mit Spülmittel gespült werden, d.h. das Spülmittel wird in den Einlass des Druckkopfs eingeleitet und tritt dann durch den Auslass des Druckkopfs in die Rückführung ein, wobei die Düsen dann vorzugsweise geschlossen sind.

Darüber hinaus besteht auch die Möglichkeit, dass das Spülmittel durch den Einlass in den Druckkopf eingeleitet wird und dann bei geöffneten Druckkopfventilen durch die Düsen wieder austritt, um auch die Düsenkanäle zu spülen.

Ferner besteht im Rahmen der Erfindung auch die Möglichkeit, dass das Spülmittel nach einem Farbwechsel mindestens teilweise als Sperrmedium in dem Spulenrohr verbleibt, um zu verhindern, dass Beschichtungsmittel überhaupt in das Spulenrohr eintritt.

Vorstehend wurde ein erster Erfindungsaspekt mit verschiedenen Weiterbildungen, Modifikationen und Abwandlungen beschrieben. Die Erfindung umfasst jedoch auch einen weiteren Erfindungsaspekt, der nachfolgend beschrieben wird.

So sieht der zweite Erfindungsaspekt vor, den Druckkopf technisch so zu gestalten, dass im Beschichtungsbetrieb ein Farbwechsel ermöglicht wird. Dies wird dadurch erreicht, dass der Druckkopf bei einem Farbwechsel mit einem Spülmittel spülbar ist, um Beschichtungsmittelreste aus dem Druckkopf herauszuspülen.

Der erfindungsgemäße Druckkopf weist in Übereinstimmung mit dem Stand der Technik eine Beschichtungsmittelzuführung auf, um das zu applizierende Beschichtungsmittel dem Druckkopf zuzuführen. Darüber hinaus weist der erfindungsgemäße Druckkopf vorzugsweise auch eine separate Spülmittelzuführung auf, um ein Spülmittel zuzuführen. Hierbei ist zu erwähnen, dass die Beschichtungsmittelzuführung vorzugsweise von der Spülmittelzuführung getrennt ist, so dass der Druckkopf für die Zuführung des Beschichtungsmittels einerseits und für die Zuführung des Spülmittels andererseits vorzugsweise getrennte Einlässe aufweist.

Bei wenigen Farben könnte ein Farbschlauch (Beschichtungsmittelzuführung) pro Farbe am Applikator (Druckkopf) angeschlossen sein (Integrated Color Changer Technik). Dann gibt es im oder am Applikator einen Spülmittelanschluss und einen Pulsluftanschluss. Diese werden dann zum Spülen benutzt.

Darüber hinaus weist der erfindungsgemäße Druckkopf vorzugsweise auch eine Rückführung auf, um Beschichtungsmittel und/oder Spülmittel zurückzuführen und zwar wahlweise in eine Ringleitung oder in eine Entsorgung. Der erfindungsgemäße Druckkopf weist also neben den getrennten Anschlüssen für die Zuführung des Beschichtungsmittels und des Spülmittels vorzugsweise auch einen weiteren getrennten Anschluss auf, um Beschichtungsmittel bzw. Spülmittel zurückzuführen.

Der Rückführstrom in die Rückführung wird hierbei vorzugsweise durch ein steuerbares Rückführventil gesteuert, das als eigenmediumbetätigtes Rückführventil oder auch als Proportionalventil ausgeführt sein kann. Derartige Ventiltypen sind an sich aus dem Stand der Technik bekannt und müssen deshalb nicht näher beschrieben werden.

In einem bevorzugten Ausführungsbeispiel der Erfindung weist der Druckkopf mehrere Düsen auf, um das Beschichtungsmittel abzugeben. Den einzelnen Düsen ist hierbei vorzugsweise jeweils ein Steuerventil zugeordnet, um die Beschichtungsmittelabgabe durch die jeweilige Düse zu steuern. Die vorstehend erwähnte Spülmittelzuführung weist dann vorzugsweise Zweigleitungen auf, die zu den einzelnen Steuerventilen führen, so dass alle Steuerventile des Druckkopfs gleichzeitig mit dem Spülmittel gespült werden können.

Vorzugsweise sind die einzelnen Zweigleitungen der Spülmittelzuführung so ausgelegt, dass das zugeführte Spülmittel gleichmäßig auf die Zweigleitungen zu den Steuerventilen verteilt wird, so dass die einzelnen Steuerventile im Wesentlichen mit der gleichen Spülmittelmenge gespült werden.

In dem bevorzugten Ausführungsbeispiel der Erfindung weist der Druckkopf mindestens eine Düse zur Abgabe des Beschichtungsmittels und ein zugehöriges Steuerventil zur Steuerung der Beschichtungsmittelabgabe durch die Düse auf, wie bereits vorstehend kurz erläutert wurde. Das Steuerventil kann hierbei wie bei der eingangs beschriebenen bekannten Konstruktion eine elektrische Spule aufweisen, die auf ein Spulenrohr aufgewickelt sein kann. Es wurde bereits eingangs zum Stand der Technik erläutert, dass sich in diesem Spulenrohr Beschichtungsmittelreste ablagern können, was zum einen die Funktionsfähigkeit des Steuerventils beeinträchtigen und zum anderen die Farbwechselfähigkeit verhindern kann. Bei dem erfindungsgemäßen Druckkopf mündet die Spülmittelzuleitung deshalb vorzugsweise in das Spulenrohr, um das Innere des Spulenrohrs zu spülen.

Hierbei ist zu erwähnen, dass das Spulenrohr - wie bei dem eingangs beschriebenen herkömmlichen Steuerventil - vorzugsweise einen kreisförmigen Innenquerschnitt aufweist und einen Spulenkern enthält. Hierbei kann es vorteilhaft sein, wenn der Spulenkern einen Profilquerschnitt aufweist, der den Innenquerschnitt des Spulenrohrs nicht vollständig ausfüllt, um zwischen dem Spulenrohr und dem Spulenkern Platz zu lassen für das Spülmittel, damit das Spülmittel in axialer Richtung durchströmen kann. Beispielsweise kann der Spulenkern hierzu einen sternförmigen Profilquerschnitt aufweisen mit radial abstehenden und in axialer Richtung verlaufenden Rippen, so dass das Spülmittel zwischen den Rippen des Spulenkerns in axialer Richtung strömen kann.

Alternativ besteht die Möglichkeit, dass der Spulenkern in seiner Mantelfläche eine Spülnut aufweist, die beispielsweise axial, in Umfangsrichtung oder spiralförmig verlaufen kann.

Ferner können in dem Spulenkern aber auch axial verlaufende Spülkanäle angeordnet sein.

Ein weiteres Beispiel sieht vor, dass der Profilquerschnitt des Spulenkerns gitterförmig ist und von dem Spülmittel durchströmt werden kann.

Weiterhin ist zu erwähnen, dass der Spulenkern vorzugsweise gegenüber dem Spulenrohr mit einer Dichtung abgedichtet ist, insbesondere mit einer Druckfestigkeit von mehr als 2bar, 4bar oder 6bar.

Es wurde bereits vorstehend kurz erwähnt, dass der Druckkopf mehrere Steuerventile aufweisen kann, die alle gespült werden können. Dabei weisen die einzelnen Steuerventile in der Regel jeweils ein Spulenrohr auf, wobei die Spülmittelzuführung dann in sämtliche Spulenrohre mündet, um alle Spulenrohre spülen zu können.

Ferner ist zu erwähnen, dass das Steuerventil in der Regel - wie bei dem eingangs beschriebenen bekannten Steuerventil - einen verschiebbaren Anker aufweist, der in Abhängigkeit von der Bestromung der Spule verschoben wird und in Abhängigkeit von seiner Stellung die Düse verschließt oder freigibt.

Dieser Anker verläuft vorzugsweise auf einem Teil seiner Länge koaxial in dem Spulenrohr und weist vorzugsweise einen axial durchlässigen Profilquerschnitt auf, damit Spülmittel zwischen dem Anker und der Innenwand des Spulenrohrs strömen kann. Hierzu weist der Anker vorzugsweise einen nichtkreisförmigen Profilquerschnitt auf, der den kreisförmigen Innenquerschnitt des Spulenrohrs nicht vollständig ausfüllt und deshalb eine axiale Spülmittelströmung erlaubt. Beispielsweise kann der Profilquerschnitt des Ankers sternförmig oder kreuzförmig sein.

In einer Variante der Erfindung mündet die Spülmittelzuführung in axialer Richtung zwischen dem Anker und dem Spulenkern in das Spulenrohr.

In einer anderen Variante der Erfindung mündet die Spülmittelzuführung dagegen in axialer Richtung im Bereich des Spulenkerns in das Spulenrohr, insbesondere an dem dem beweglichen Anker abgewandten Ende des Düsenrohrs.

In einer anderen Variante der Erfindung ist der bewegliche Anker in einem spülmitteldurchlässigen Führungskäfig angeordnet, insbesondere in einem geschlitzten Zylinder. Dies bietet den Vorteil, dass der bewegliche Anker bei einem Spülvorgang gespült werden kann, wodurch Beschichtungsmittelablagerungen an dem Anker vermieden werden.

In einer anderen Variante der Erfindung weist der verschiebbare Anker eine mittige Führungsbohrung auf, wobei ein Führungsstift in die Führungsbohrung hineinragt. Dadurch wird eine Linearführung bewirkt, die jedoch ebenfalls gespült werden kann.

In einem anderen Ausführungsbeispiel der Erfindung ist eine flexible Membran vorgesehen, die das Steuerventil von der Beschichtungsmittelzuführung trennt, so dass das Steuerventil durch die Membran vor einem Kontakt mit einem Beschichtungsmittel geschützt wird. Hierbei muss das Steuerventil selbst also überhaupt nicht gespült werden, da das Steuerventil selbst überhaupt nicht in Kontakt mit dem jeweiligen Beschichtungsmittel kommt. Vielmehr soll nur die glatte Beschichtungsmittelseitige Oberfläche der Membran gespült werden, was jedoch sehr einfach und effizient möglich ist, da die glatte Membranoberfläche kaum Ansatzpunkte für Lackablagerungen bildet.

Der erfindungsgemäße Druckkopf ermöglicht vorzugsweise einen schnellen Farbwechsel innerhalb einer Farbwechseldauer von weniger als 1h, 20min, 10min, 30s, 10s oder sogar weniger als 5s.

Hierbei werden auch möglichst geringe Farbwechselverluste angestrebt, die bei dem erfindungsgemäßen Druckkopf vorzugsweise kleiner sind als 5l, 2l, 200ml, 20ml, 10ml, 5ml oder sogar kleiner als 2ml.

Dies führt auch vorteilhaft zu einem sehr geringeren Spülmittelverbrauch bei einem Farbwechsel, wobei der Spülmittelverbrauch vorzugsweise kleiner ist als 10l, 5l, 2l, 200ml, 100ml, 50ml, 20ml oder sogar kleiner als 10ml.

Ferner besteht im Rahmen der Erfindung auch die Möglichkeit, dass der Druckkopf mehrere getrennte Spülmittelzuführungen aufweist, um verschiedene Spülmittel zuzuführen, die beispielsweise an das jeweilige Beschichtungsmittel angepasst sein können.

Darüber hinaus ist zu erwähnen, dass der Druckkopf mit seinen medienführenden Teilen vorzugsweise so konstruiert ist, dass die medienführenden Teile totraumfrei und/oder hinterschneidungsfrei sind, um die Spülbarkeit zu verbessern.

Zur Verbesserung der Spülbarkeit besteht auch die Möglichkeit, dass der Druckkopf an seinen Oberflächen, die mit dem Beschichtungsmittel in Kontakt kommen, mit einer reinigungsfördernden Beschichtung versehen ist, wobei eine solche Beschichtung auch als "Easy-to-clean-Beschichtung" bekannt ist.

Darüber hinaus ist zu bemerken, dass die Erfindung nicht nur Schutz beansprucht für den vorstehend beschriebenen erfindungsgemäßen Druckkopf als einzelnes Bauteil bzw. als Austauschteil. Vielmehr beansprucht die Erfindung auch Schutz für eine komplette Beschichtungseinrichtung mit einem solchen Druckkopf.

Darüber hinaus umfasst die erfindungsgemäße Beschichtungseinrichtung vorzugsweise auch einen Farbwechsler, wie beispielsweise einen Linearfarbwechsler, einen Rotationsfarbwechsler, einen in den Druckkopf integrierten Farbwechsler oder einen A/B-Farbwechsler. Diese Typen von Farbwechslern sind an sich aus dem Stand der Technik bekannt und müssen deshalb nicht weiter beschrieben werden.

Schließlich umfasst die Erfindung auch ein entsprechendes Betriebsverfahren für einen solchen Druckkopf, wobei sich die einzelnen Verfahrensschritte bereits aus der vorstehenden Beschreibung ergeben und deshalb nicht näher beschrieben werden müssen.

Allerdings ist zu erwähnen, dass das Spülmittel ein Universalspülmittel sein kann, das sowohl für wasserbasierten Lack als auch für Lösemittellack geeignet ist. Darüber hinaus kann das Spülmittel ein VOC-freies (VOC: volatile organic compounds) Spülmittel sein.

Bei dem Spülvorgang kann der Druckkopf zusammen mit dem Spülmittel auch oder abwechselnd mit Pulsluft gespült werden.

Ferner besteht auch die Möglichkeit, dass dem Druckkopf zum Spülen ein Aerosol zugeführt wird.

Weiterhin besteht im Rahmen der Erfindung die Möglichkeit, dass dem Druckkopf nacheinander verschiedene Spülmittel zugeführt werden.

In einer Variante des erfindungsgemäßen Betriebsverfahrens wird zunächst ein lösemittelbasierter Lack zugeführt und appliziert. Anschließend wird der Druckkopf dann mit einem lösemittelbasierten Spülmittel gespült, um Reste des lösemittelbasierten Lacks auszuspülen. Optional kann dann noch ein Trennmittel zugeführt werden, beispielsweise Alkohol. Im nächsten Schritt wird dann ein Wasserlack zugeführt und appliziert. Schließlich wird der Druckkopf dann mit einem wasserlackbasierten Spülmittel gespült, um Reste des Wasserlacks auszuspülen.

Die vorstehende Beschreibung erläutert einen Wechsel von einem lösemittelbasierten Lack zu einem Wasserlack. Selbstverständlich ist auch umgekehrt ein Wechsel von einem Wasserlack auf einen lösemittelbasierten Lack möglich, was eine entsprechend geänderte Reihenfolge der vorstehend beschriebenen Verfahrensschritte erfordert.

Nach einem Farbwechsel wird der Druckkopf vorzugsweise mit dem neuen Beschichtungsmittel angedrückt, d.h. befüllt. Dabei wird vorzugsweise auch eine definierte Lackmenge durch die Düse des Druckkopfs ausgebracht.

Beim Betrieb des erfindungsgemäßen Druckkopfs besteht auch die Möglichkeit, dass alle bei einem Spülvorgang abgegebenen Fluide (Beschichtungsmittel und Spülmittel) für eine Entsorgung aufgefangen werden.

Ferner besteht auch die Möglichkeit, dass beim Farbwechsel auch die Außenfläche des Düsenkopfs gespült wird, um dort anhaftende Beschichtungsmittelreste zu entfernen.

Zu dem Spülvorgang ist weiterhin zu erwähnen, dass das Spülmittel nacheinander oder abwechselnd in die Rückführung oder durch die Düse abgeführt werden kann. Darüber hinaus besteht optional auch die Möglichkeit eines Spülens mit einem Gemisch aus Spülmittel und Pulsluft.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine schematische, stark vereinfachte Darstellung einer nicht erfindungsgemäßen Beschichtungseinrichtung mit einem Lackierroboter mit einem Druckkopf und einer Nassablageeinrichtung zur Ablage des demontierten Druckkopfs,
- Figur 2A: eine Abwandlung von Figur 1, wobei zusätzlich eine Reinigungsvorrichtung vorgesehen ist, um den abgelegten Druckkopf von außen zu reinigen und eine Materialzirkulation durch den abgelegten Druckkopf möglich ist,
- Figur 2B: ein Flussdiagramm zur Verdeutlichung eines Farbwechselvorgangs mit einer Ablage des alten Drucckopfs und einer Aufnahme eines neuen Druckkopfs,
- Figur 3A: eine Abwandlung von Figur 1 entsprechend der Erfindung mit zwei Druckköpfen an dem Beschichtungsroboter,
- Figur 3B: ein stark vereinfachtes fluidtechnisches Ersatzschaltbild der Beschichtungseinrichtung gemäß Figur 3A mit einem A/B-Farbwechsler,
- Figur 3C: ein Flussdiagramm zur Verdeutlichung des A/B-Betriebs der Beschichtungseinrichtung gemäß den Figuren 3A und 3B,
- Figur 3D: eine Abwandlung des fluidtechnischen Ersatzschaltbildes gemäß Figur 3B mit zwei separaten Farbwechslern für die beiden Druckköpfe, sowie
- Fig. 4A-4D: verschiedene Darstellungen zur Erläuterung der verschiedenen Spülmöglichkeiten.

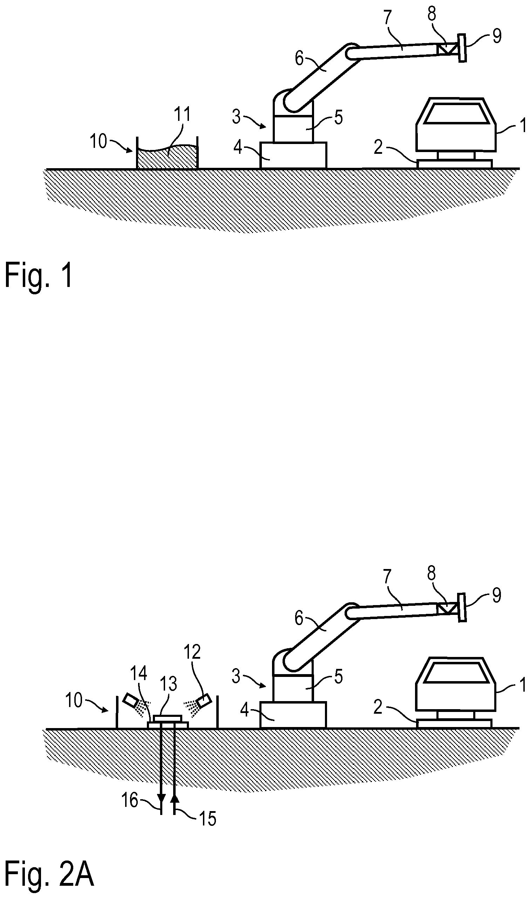

Figur 1 zeigt eine stark vereinfachte, schematische Darstellung einer nicht erfindungsgemäßen Lackieranlage zur Lackierung von Kraftfahrzeugkarosseriebauteilen 1, die von einem Förderer 2 rechtwinklig zur Zeichenebene entlang einer Lackierstraße durch die Lackieranlage gefördert werden, wobei die Förderung wahlweise im Stop-and-Go-Betrieb oder im Line-Tracking-Betrieb erfolgen kann, was an sich aus dem Stand der Technik bekannt ist und deshalb nicht näher beschrieben werden muss.

Neben dem Förderer 2 ist ein Lackierroboter 3 vereinfacht dargestellt, wobei der Lackierroboter 3 eine Roboterbasis 4, ein drehbares Roboterglied 5, einen proximalen Roboterarm 6 ("Arm 1"), einen distalen Roboterarm 7 ("Arm 2") und eine mehrachsige Roboterhandachse 8 aufweist, was an sich aus dem Stand der Technik bekannt ist. Die Roboterbasis 4 kann hierbei wahlweise ortsfest angeordnet sein oder entlang einer nicht dargestellten Verfahrschiene rechtwinklig zur Zeichenebene verfahren werden.

Das drehbare Roboterglied 5 ist hierbei um eine senkrechte Drehachse relativ zu der Roboterbasis 4 drehbar.

Der proximale Roboterarm 6 ist dagegen um eine waagerechte Schwenkachse relativ zu dem drehbaren Roboterglied 5 schwenkbar.

Der distale Roboterarm 7 ist ebenfalls um eine waagerechte Schwenkachse relativ zu dem proximalen Roboterarm 6 schwenkbar.

Die Roboterhandachse 8 weist einen Montageflansch auf, an dem ein Druckkopf 9 auswechselbar montiert ist. Der Druckkopf 9 weist hierbei eine Vielzahl von Düsen auf, um jeweils einen Beschichtungsmittelstrahl auf die Oberfläche des Kraftfahrzeugkarosseriebauteils 1 abzugeben.

Darüber hinaus weist die dargestellte Beschichtungseinrichtung eine Nassablageeinrichtung 10 auf, die mit einem Flüssigkeitsbad 11 gefüllt ist, wobei es sich bei der Flüssigkeit beispielsweise um einen Verdünner handeln kann. Das Flüssigkeitsbad 11 kann alternativ zum Befeuchten des Druckkopfs 9 auch ein getränktes Kissen oder einen Schwamm enthalten.

Bei einem Farbwechsel legt der Beschichtungsroboter 3 den Druckkopf 9 in dem Flüssigkeitsbad 11 ab und entnimmt einen anderen Druckkopf aus der Nassablageeinrichtung 10, damit dann mit dem neuen Druckkopf (nicht dargestellt) ein anderer Lack appliziert werden kann.

Darüber hinaus positioniert der Lackierroboter 3 den Drucckopf 9 in längeren Lackierpausen in dem Flüssigkeitsbad 11, um zu verhindern, dass der Lack in den Düsen des Druckkopfs 9 antrocknet.

Zu diesem Ausführungsbeispiel ist zu erwähnen, dass die Zeichnung nur eine stark vereinfachte schematische Darstellung wiedergibt und lediglich zur Verdeutlichung des erfindungsgemäßen Gedankens dient.

Figur 2A zeigt eine Abwandlung des Ausführungsbeispiels gemäß Figur 1, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Nassablageeinrichtung 10 auch als Reinigungseinrichtung ausgebildet ist und Reinigungsdüsen 12 enthält, um den abgelegten Druckkopf 13 von außen mit einer Reinigungsflüssigkeit (z.B. Verdünner) zu besprühen.

Eine weitere Besonderheit dieses Ausführungsbeispiels besteht darin, dass die Nassablageeinrichtung 10 eine Andockeinrichtung 14 enthält, die eine Strömungsverbindung mit dem abgelegten Druckkopf 13 herstellen kann. So weist der Drucckopf 13 einen Einlass auf, um Flüssigkeit (z.B. Lack, Spülmittel) in den Druckkopf 13 einleiten zu können. Darüber hinaus weist der Druckkopf 13 einen Auslass auf, um die Flüssigkeit (z.B. Lack, Spülmittel) wieder aus dem Druckkopf 13 ableiten zu können. Die Andockeinrichtung 14 kann nun an den Einlass und den Auslass des abgelegten Druckkopfs 13 andocken, so dass dann über Zirkulationsleitungen 15, 16 eine Fluidzirkulation durch den abgelegten Druckkopf 13 erfolgen kann.

Beispielsweise kann der abgelegte Druckkopf 13 dann über die Zirkulationsleitungen 15, 16 mit demselben Lack durchströmt werden, der zuvor von dem Druckkopf 13 appliziert wurde.

Alternativ besteht die Möglichkeit, dass mittels der Andockeinrichtung 14 ein Farbwechsel durchgeführt wird. In diesem Fall wird der abgelegte Druckkopf 13 dann zunächst über die Zirkulationsleitungen 15, 16 mit einem Spülmittel gespült, um den Druckkopf 13 zu reinigen. Anschließend kann der abgelegte Druckkopf 13 dann mit dem neuen Lack angedrückt werden, so dass der Druckkopf 13 dann sofort zur Applikation mit dem neuen Lack zur Verfügung steht.

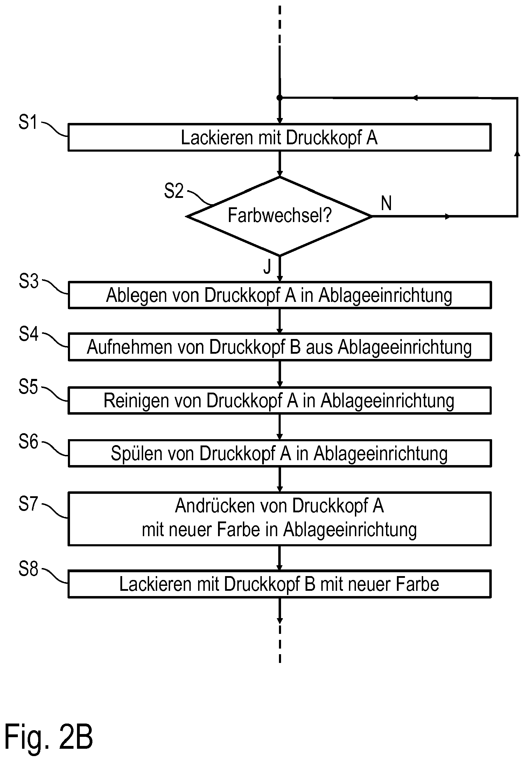

Figur 2B zeigt die Betriebsweise der Beschichtungseinrichtung gemäß Figur 2A in einem Flussdiagramm.

In einem Schritt S1 wird hiermit zunächst mit einem Drucckopf A lackiert, der an dem Lackierroboter 3 montiert ist.

Falls in einem Schritt S2 ermittelt wird, dass ein Farbwechsel gewünscht ist, so wird der montierte Druckkopf A dann zunächst in einem Schritt S3 in der Nassablageeinrichtung 10 abgelegt.

In einem Schritt S4 wird dann ein Druckkopf B aus der Nassablageeinrichtung 10 von dem Lackierroboter 3 aufgenommen.

Der abgelegte Druckkopf A wird dann in einem Schritt S5 in der Nassablageeinrichtung 10 gereinigt und in einem Schritt S6 gespült.

In einem Schritt S7 wird der abgelegte Druckkopf A dann mit einem neuen Lack angedrückt.

Währenddessen kann dann in einem Schritt S8 bereits mit dem neu aufgenommenen Druckkopf B mit dem neuen Lack lackiert werden.

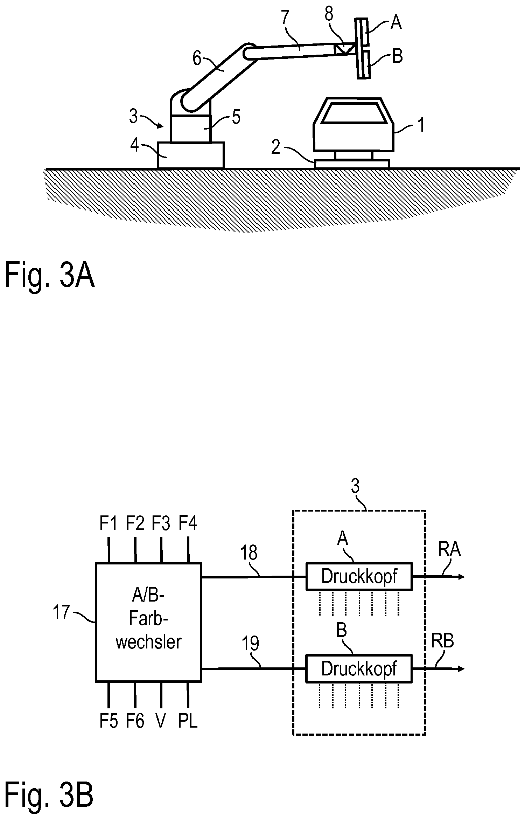

Die Figuren 3A-3C dienen zur Erläuterung einer Abwandlung des Ausführungsbeispiels gemäß den Figuren 2A und 2B, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass an dem Lackierroboter 3 zwei Druckköpfe A, B montiert sind, was einen sogenannten A/B-Betrieb mittels eines A/B-Farbwechslers 17 ermöglicht. Der A/B-Farbwechsler 17 ist über zwei parallele Farbleitungen 18, 19 mit den beiden Druckköpfen A, B verbunden, die den nicht benötigten Lack bzw. Spülmittelrest jeweils in eine Rückführleitung RA bzw. RB zurückführen können.

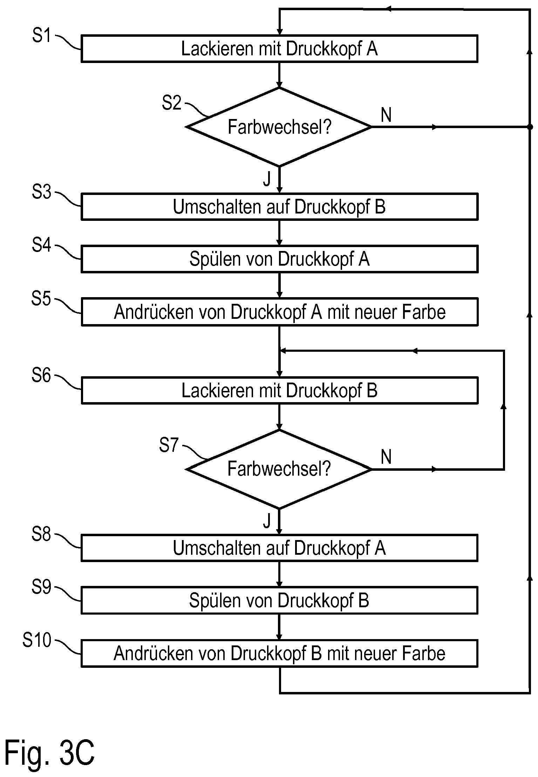

Figur 3C zeigt die Funktionsweise des sogenannten A/B-Betriebs bei der Beschichtungseinrichtung gemäß den Figuren 3A und 3B.

In einem ersten Schritt S1 wird zunächst mit dem Druckkopf A lackiert.

Falls dann in einem Schritt S2 festgestellt wird, dass ein Farbwechsel erfolgen soll, so wird beim Schritt S3 auf den anderen Druckkopf B umgeschaltet.

Dann wird in einem Schritt S4 der Druckkopf A gespült und anschließend am Schritt S5 mit dem gewünschten neuen Lack angedrückt.

Währenddessen kann mit dem Druckkopf B bereits in einem Schritt S6 unterbrechungsfrei ein neuer Lack appliziert werden. Die Schritte S4 und S5 verzögern hierbei also nicht den Farbwechsel, so dass nahezu unterbrechungsfrei bei einem Farbwechsel lackiert werden kann.

Falls dann in einem Schritt S7 wieder festgestellt wird, dass ein erneuter Farbwechsel erfolgen soll, so wird in einem Schritt S8 auch wieder auf den Druckkopf A umgeschaltet und der Druckkopf B wird beim Schritt S9 gespült und in einem Schritt S10 mit neuem Lack angedrückt.

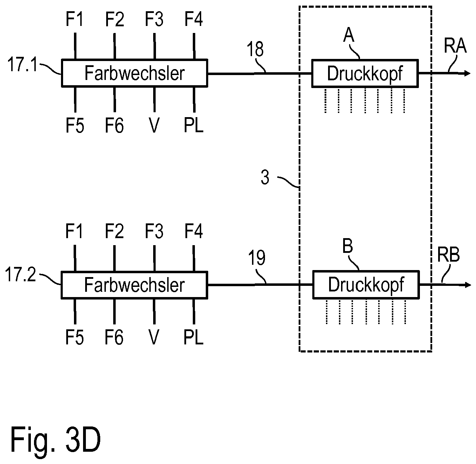

Figur 3D zeigt eine Abwandlung des fluidtechnischen Ersatzschaltbildes gemäß Figur 3B, so dass zur Vermeidung von Wiederholungen mit auf die vorstehende Beschreibung verwiesen wird, wobei für entsprechende Einzelheiten dieselben Bezugszeichen verwendet werden.

Eine Besonderheit dieses Ausführungsbeispiels besteht darin, dass anstelle des A/B-Farbwechslers 17 zwei getrennte Farbwechsler 17.1, 17.2 vorgesehen sind.

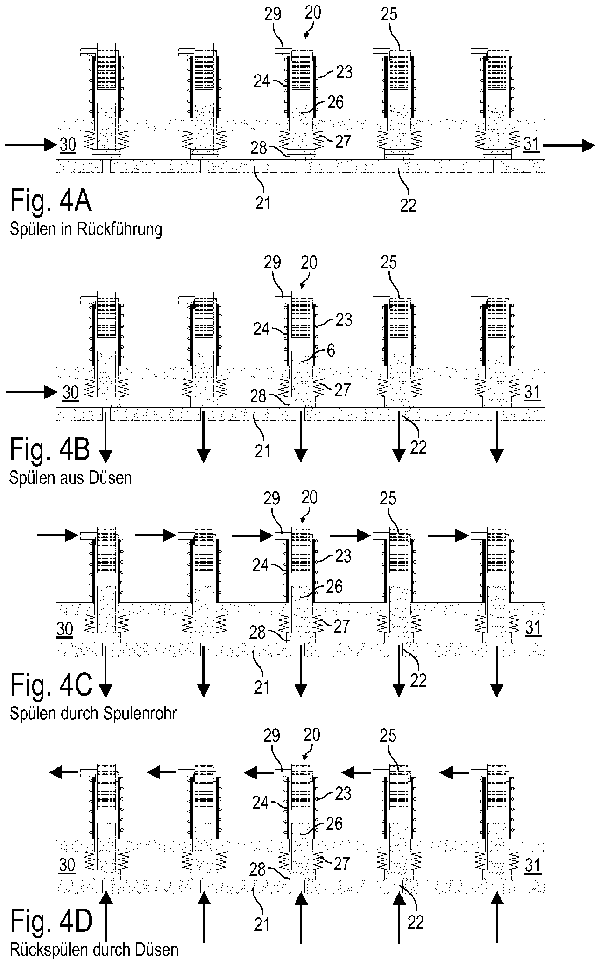

Die Figuren 4A-4D zeigen eine schematische Darstellung eines Druckkopfs mit mehreren Druckkopfventilen 20 zur Steuerung der Beschichtungsmittelabgabe. Der dargestellte Druckkopf weist hierbei eine Düsenplatte 21 mit zahlreichen Düsen 22 auf, die von den einzelnen Druckkopfventilen 20 geschlossen bzw. geöffnet werden können.

Die einzelnen Druckkopfventile 20 werden elektrisch angesteuert und arbeiten magnetisch. Hierzu weisen die Druckkopfventile 20 jeweils eine Spule 23 auf, die auf ein Spulenrohr 24 aufgewickelt ist, wobei das Spulenrohr 24 einen Spulenkern 25 und einen beweglichen Anker 26 aufweist. Der Anker 26 ist hierbei in der Zeichnung in senkrechter Richtung verschiebbar und wird von einer Rückstellfeder 27 in die in den Zeichnungen gezeigte Schließstellung gedrückt, in der eine Dichtung 28 am unteren Ende des Ankers 26 die Düse 22 verschließt.

Zum Öffnen des Druckkopfventils 20 wird die Spule 23 also so bestromt, dass der Anker 26 in der Zeichnung nach oben gedrückt wird, so dass die Dichtung 28 die Düse 22 freigibt.

Darüber hinaus weisen die einzelnen Druckkopfventile 20 jeweils einen Spülanschluss 29 am oberen Ende auf.

Der Druckkopf selbst enthält einen Einlass 30 zum Zuführen von Lack bzw. Spülmittel und einem Auslass 31 zum Abführen von Lack bzw. Spülmittel.

Zu den Zeichnungen gemäß den Figuren 4A-4D ist zu erwähnen, dass in den Zeichnungen alle Druckkopfventile 20 im geschlossenen Zustand gezeichnet sind und die Düsen 22 dann verschließen. Tatsächlich müssen die einzelnen Druckkopfventile 20 jedoch öffnen bzw. schließen, um die nachfolgend beschriebenen Spülvorgänge realisieren zu können.

Weiterhin ist zu erwähnen, dass die Zeichnungen jeweils durch einen großen Pfeil den Strömungsweg des Spülmittels in den verschiedenen Spülvorgängen zeigen.

Bei Figur 4A wird das Spülmittel über den Einlass 30 in den Druckkopf eingeleitet und verlässt den Druckkopf dann wieder über den Auslass 31 in die Rückführung, wobei sämtliche Druckkopfventile 20 geschlossen sind.

Bei dem Spülvorgang gemäß Figur 4B wird das Spülmittel ebenfalls über den Einlass 30 in den Druckkopf eingeleitet und verlässt dann den Druckkopf wieder über die Düsen 22. Bei diesem Spülvorgang müssen die einzelnen Druckkopfventile 20 abweichend von der Zeichnung geöffnet werden.

Bei dem Spülvorgang gemäß Figur 4C wird das Spülmittel dagegen über die Spülanschlüsse 29 der einzelnen Druckkopfventile 20 zugeführt und verlässt den Druckkopf dann wieder über die Düsen 22. Auch hierbei müssen die einzelnen Druckkopfventile 20 die Düsen 22 abweichend von der Zeichnung freigeben.

Bei dem Spülvorgang gemäß Figur 4D wird das Spülmittel dagegen in umgekehrter Richtung durch die geöffneten Düsen 22 eingeführt und verlässt den Druckkopf dann wieder über die Spülanschlüsse 29 der einzelnen Druckkopfventile 20 und/oder (nicht dargestellt) über die Rückführung. Es besteht also im Rahmen der Erfindung die Möglichkeit, dass die Spulenrohre 24 der einzelnen Druckkopfventile 20 bidirektional von Spülmittel durchströmt werden, um eine gute Spülwirkung zu erreichen.

### Bezugszeichenliste:

- 1: Kraftfahrzeugkarosseriebauteil
- 2: Förderer
- 3: Lackierroboter
- 4: Roboterbasis
- 5: Drehbares Roboterglied
- 6: Proximaler Roboterarm ("Arm 1")
- 7: Distaler Roboterarm ("Arm 2")
- 8: Roboterhandachse
- 9: Druckkopf
- 10: Nassablageeinrichtung
- 11: Flüssigkeitsbad
- 12: Reinigungsdüsen in der Nassablageeinrichtung
- 13: Abgelegter Druckkopf in der Nassablageeinrichtung
- 14: Andockeinrichtung in der Nassablageeinrichtung
- 15: Zirkulationsleitung in der Nassablageeinrichtung
- 16: Zirkulationsleitung in der Nassablageeinrichtung
- 17: A/B-Farbwechsler
- 17.1: Farbwechsler
- 17.2: Farbwechsler
- 18: Farbleitungen
- 19: Farbleitungen
- 20: Druckkopfventile
- 21: Düsenplatte
- 22: Düsen
- 23: Spule
- 24: Spulenrohr
- 25: Spulenkern
- 26: Anker
- 27: Rückstellfeder
- 28: Dichtung
- 29: Spülanschluss
- 30: Einlass des Druckkopfs
- 31: Auslass des Druckkopfs
- A, B: Druckkopf
- F1-F6: Farbleitungen
- PL: Pulsluftleitung
- V: Verdünnerleitung
- RA, RB: Rückführleitungen

## Patentansprüche

1. Beschichtungseinrichtung zur Beschichtung von Bauteilen (1) mit einem Beschichtungsmittel, insbesondere zur Lackierung von Kraftfahrzeugkarosseriebauteilen (1) mit einem Lack, mit
a) einem mehrachsigen Beschichtungsroboter (3), insbesondere mit
a1) einer seriellen Roboterkinematik (4-8),
a2) mindestens sechs oder sieben beweglichen Roboterachsen, und/oder
a3) einer mehrachsigen Roboterhandachse (8), sowie mit
b) einem ersten Druckkopf (9) mit
b1) mindestens einer Düse (22) zur Abgabe eines Beschichtungsmittelstrahls des Beschichtungsmittels aus der Düse auf die Oberfläche des zu beschichtenden Bauteils (1), und
b2) mindestens einem Druckkopfventil (20) zur Steuerung der Beschichtungsmittelabgabe durch die Düse (22),
b3) wobei der erste Druckkopf (9) an dem Beschichtungsroboter (3) montiert ist und von dem Beschichtungsroboter (3) über die Oberfläche des zu beschichtenden Bauteils (1) geführt wird,
d) einem zweiten Druckkopf (B), der zusätzlich zu dem ersten Druckkopf (A) an dem Beschichtungsroboter (3) montiert ist, wobei die beiden Druckköpfe (A, B) jeweils ein bestimmtes Beschichtungsmittel applizieren, um ohne einen Druckkopfaustausch einen Farbwechsel zu ermöglichen,
e) einem ersten Beschichtungsmittelkreis, der durch den ersten Druckkopf (A) verläuft, so dass das Beschichtungsmittel durch den ersten Druckkopf (A) zirkulieren kann,
**dadurch gekennzeichnet,**
f) dass ein zweiter Beschichtungsmittelkreis durch den zweiten Druckkopf (B) verläuft, so dass das Beschichtungsmittel durch den zweiten Druckkopf (B) zirkulieren kann.

2. Beschichtungseinrichtung nach Anspruch 1,
**dadurch gekennzeichnet,**
a) **dass** der erste Druckkopf (A) Beschichtungsmittel applizieren kann, während der zweite Druckkopf (B) mit einem Spülmittel gespült wird, und
b) **dass** der zweite Druckkopf (B) Beschichtungsmittel applizieren kann, während der erste Druckkopf (A) mit dem Spülmittel gespült wird, und
c) **dass** die beiden Druckköpfe (A, B) jeweils abwechselnd mit dem Spülmittel gespült werden und Beschichtungsmittel applizieren.

3. Beschichtungseinrichtung nach einem der Ansprüche 1 oder 2, **dadurch gekennzeichnet,**
a) **dass** für jedes zu applizierende Beschichtungsmittel jeweils ein separater Druckkopf (A, B) an dem Beschichtungsroboter (3) angebracht ist, so dass die Druckköpfe jeweils nur von dem zugehörigen Beschichtungsmittel durchströmt werden, und/oder
b) **dass** die Anzahl der an dem Beschichtungsroboter (3) montierten Druckköpfe (A, B) größer ist als 2 oder und/oder
c) **dass** die Anzahl der an dem Beschichtungsroboter (3) montierten Druckköpfe (A, B) kleiner ist als 6, und/oder
d) **dass** die einzelnen Druckköpfe (A, B) jeweils an eine separate Beschichtungsmittelzuleitung angeschlossen sind, so dass die Beschichtungsmittelzuleitungen jeweils nur von dem zugehörigen Beschichtungsmittel durchströmt werden.

4. Beschichtungseinrichtung nach einem der Ansprüche 1 bis 3, **dadurch gekennzeichnet,**
a) **dass** die Anzahl der an dem Beschichtungsroboter (3) montierten Druckköpfe (A, B) größer ist als 2, 4, 6, 10, 20, und kleiner ist als 30, 40 oder 50 und/oder
b) **dass** die einzelnen Druckköpfe (A, B) jeweils an eine separate Beschichtungsmittelzuleitung angeschlossen sind, so dass die Beschichtungsmittelzuleitungen jeweils nur von dem zugehörigen Beschichtungsmittel durchströmt werden.

5. Beschichtungseinrichtung nach einem der vorhergehenden Ansprüche, **gekennzeichnet durch** eine Zeitsteuerung zur zeitgesteuerten Spülung des ersten Druckkopfs (9, 13, A, B) und/oder des zweiten Druckkopfs (9, 13, A, B) mit einem Spülmittel.

6. Beschichtungseinrichtung nach Anspruch 5,
**dadurch gekennzeichnet,**
a) **dass** die Zeitsteuerung jeweils nach Ablauf eines vorgegebenen Spülintervalls einen Spülvorgang des ersten Druckkopfs (9, 13, A, B) und/oder des zweiten Drucckopfs auslöst, insbesondere nach einem Spülintervall von 1h, 2h oder 4h, und/oder
b) **dass** die Zeitsteuerung jeweils nach Ablauf einer vorgegebenen Stillstandsdauer eines die zu beschichtenden Bauteile (1) fördernden Förderers einen Spülvorgang des ersten Druckkopfs (9, 13, A, B) und/oder des zweiten Druckkopfs (9, 13, A, B) auslöst, insbesondere nach einer Stillstandsdauer von mehr als 10min, 20min, 30min oder 1h.

7. Beschichtungseinrichtung nach einem der vorhergehenden Ansprüche, **dadurch gekennzeichnet,**
a) **dass** zur Reinigung des ersten Druckkopfs (9, 13, A, B) und/oder des zweiten Druckkopfs (9, 13, A, B) eine Reinigungsvorrichtung (12) vorgesehen ist, und
b) **dass** die Reinigungsvorrichtung (12) getrennt von dem Beschichtungsroboter (3) ortsfest angeordnet ist, und
c) **dass** der Beschichtungsroboter (3) den ersten und/oder den zweiten Druckkopf (9, 13, A, B) in die Reinigungsvorrichtung (12) einführen kann, um den ersten und/oder den zweiten Druckkopf in der Reinigungsvorrichtung zu reinigen.

8. Beschichtungseinrichtung nach einem der vorhergehenden Ansprüche, **dadurch gekennzeichnet,**
a) **dass** der erste und/oder zweite Druckkopf (9, 13, A, B) einen eng begrenzten Beschichtungsmittelstrahl abgibt im Gegensatz zu einem Sprühnebel, und/oder
b) **dass** der erste und/oder zweite Druckkopf (9, 13, A, B) einen Tröpfchenstrahl abgibt im Gegensatz zu einem in Strahllängsrichtung zusammen hängenden Beschichtungsmittelstrahl, oder
c) **dass** der erste und/oder zweite Druckkopf (9, 13, A, B) einen in Strahllängsrichtung zusammen hängenden Beschichtungsmittelstrahl abgibt im Gegensatz zu einem Tröpfchenstrahl, und/oder
d) **dass** der Beschichtungsmitteldruck mit einer maximalen Schwankungsbreite von ±500mbar, ±200mbar, ±100mbar, ±50mbar kontrolliert wird, und/oder
e) **dass** der erste und/oder zweite Druckkopf (9, 13, A, B) einen Auftragswirkungsgrad von mindestens 80%, 90%, 95% oder 99% aufweist, so dass im Wesentlichen das gesamte applizierte Beschichtungsmittel vollständig auf dem Bauteil (1) abgelagert wird, ohne dass Overspray entsteht, und/oder
f) **dass** der erste und/oder zweite Druckkopf (9, 13, A, B) eine Flächenbeschichtungsleistung von mindestens 0,5 m²/min, 1m²/min, 2m²/min oder mindestens 3m²/min aufweist, und/oder
g) **dass** der Volumenstrom des applizierten Beschichtungsmittels und damit die Austrittsgeschwindigkeit des Beschichtungsmittels so eingestellt wird, dass das Beschichtungsmittel nach dem Auftreffen auf das Bauteil (1) nicht von dem Bauteil (1) abprallt, und/oder
h) **dass** die Austrittsgeschwindigkeit des Beschichtungsmittels aus dem ersten und/oder zweiten Druckkopf (9, 13, A, B) mindestens 5 m/s, 7 m/s oder 10 m/s beträgt, und/oder
i) **dass** die Austrittsgeschwindigkeit des Beschichtungsmittels aus dem ersten und/oder zweiten Druckkopf (9, 13, A, B) höchstens 30 m/s, 20 m/s oder 10 m/s beträgt, und/oder
j) **dass** der Applikationsabstand mindestens 4mm, 10 mm oder 40 mm und/oder beträgt, und/oder
k) **dass** der Applikationsabstand höchstens 200mm oder 100 mm beträgt, und/oder
l) **dass** das Beschichtungsmittel ein Lack ist, insbesondere ein Basislack, ein Klarlack, ein Effektlack, ein Mica-Lack oder ein Metallic-Lack, und/oder
m) **dass** das Beschichtungsmittel ein Wasserlack oder ein Lösemittellack ist, und/oder
n) **dass** der erste und/oder zweite Druckkopf (9, 13, A, B) mindestens einen elektrisch ansteuerbaren Aktor aufweist, um Tropfen des Beschichtungsmittels aus dem ersten bzw. zweiten Druckkopf (9, 13, A, B) auszustoßen, insbesondere einen Magnetaktor oder einen Piezoaktor.

9. Beschichtungsverfahren zur Beschichtung von Bauteilen (1) mit einem Beschichtungsmittel, insbesondere zur Lackierung von Kraftfahrzeugkarosseriebauteilen (1) mit einem Lack, mittels einer Beschichtungseinrichtung nach einem der vorhergehenden Ansprüche, mit den folgenden Schritten:
a) Bewegen eines ersten Druckkopfs (9) mit mindestens einer Düse (22) und einem zugehörigen Druckkopfventil (20) mittels eines mehrachsigen Beschichtungsroboters (3) über eine Oberfläche des zu beschichtenden Bauteils (1), und
b) Abgabe eines Beschichtungsmittelstrahls eines ersten Beschichtungsmittels durch die Düse (22) des ersten Druckkopfs (9) auf die Oberfläche des zu beschichtenden Bauteils (1),
d) Farbwechsel mit einem Umschalten der Beschichtungsmittelabgabe von dem ersten Druckkopf (A) auf einen zweiten Druckkopf (B), der an demselben Beschichtungsroboter (3) montiert ist zur anschließenden Abgabe eines Beschichtungsmittelstrahls eines zweiten Beschichtungsmittels durch den zweiten Druckkopf (B).

10. Beschichtungsverfahren nach Anspruch 9, **gekennzeichnet durch** folgende Schritte:
a) dass der erste Druckkopf (A) Beschichtungsmittel appliziert, während der zweite Druckkopf (B) mit einem Spülmittel gespült wird, und
b) dass der zweite Druckkopf (B) Beschichtungsmittel appliziert, während der erste Druckkopf (A) mit einem Spülmittel gespült wird.

11. Beschichtungsverfahren nach einem der Ansprüche 9 bis 10, **gekennzeichnet durch** folgende Schritte:
a) Applizieren des ersten Beschichtungsmittels durch den ersten Druckkopf (A), während das zweite Beschichtungsmittel bei geschlossenen Druckkopfventilen (20) des zweiten Druckkopfs (B) durch den zweiten Druckkopf (B) zirkuliert, und
b) Applizieren des zweiten Beschichtungsmittels durch den zweiten Druckkopf (B), während das erste Beschichtungsmittel bei geschlossenen Druckkopfventilen (20) des ersten Druckkopfs (A) durch den ersten Druckkopf zirkuliert.

12. Beschichtungsverfahren nach einem der Ansprüche 9 bis 11, **gekennzeichnet durch** folgende Schritte bei einem Farbwechsel von einem lösemittelbasierten Lack zu einem Wasserlack:
a) Spülen des ersten oder zweiten Druckkopfs mit einem Lösemittel-Spülmittel,
b) Optional Spülen des ersten oder zweiten Druckkopfs mit einem Trennmittel, insbesondere mit Alkohol,
c) Spülen des ersten oder zweiten Druckkopfs mit einem wasserbasierten Spülmittel.

13. Beschichtungsverfahren nach einem der Ansprüche 9 bis 12, **gekennzeichnet durch** folgende Schritte bei einem Farbwechsel:
a) Sequentielles Spülen des ersten oder zweiten Druckkopfs (9, 13, A, B) mit unterschiedlichen Spülmitteln, insbesondere mit einem zunehmenden Gehalt von organischem Lösemittel, und/oder
b) Spülen des ersten oder zweiten Druckkopfs (9, 13, A, B) mit einem Universalspülmittel sowohl zum Ausspülen von wasserbasiertem Lack als auch zum Ausspülen von Lösemittellack, und/oder
c) Spülen des ersten oder zweiten Druckkopfs (9, 13, A, B) mit einem Gemisch aus Pulsluft, Spülmittel und/oder Aerosol, und/oder
d) Spülen des ersten oder zweiten Druckkopfs (9, 13, A, B) mit einem mit einem VOC-freien Spülmittel.

14. Beschichtungsverfahren nach einem der Ansprüche 9 bis 13, **gekennzeichnet durch** folgende Schritte bei einem Farbwechsel:
a) Einführen des ersten oder zweiten Druckkopfs (9, 13, A, B) in eine Reinigungsvorrichtung (12),
b) Reinigen des ersten oder zweiten Druckkopfs (9, 13, A, B) in der Reinigungsvorrichtung (12), insbesondere durch
b1) Spülen des ersten oder zweiten Druckkopfs (9, 13, A, B) in der Reinigungsvorrichtung (12) mit einem Spülmittel, und/oder
b2) Besprühen der Außenflächen des ersten oder zweiten Druckkopfs (9, 13, A, B) mit einem Reinigungsmittel, und/oder
c) Auffangen und Entsorgen der in der Reinigungsvorrichtung (12) ausgebrachten Flüssigkeiten, insbesondere des Spülmittels, der Reinigungsflüssigkeit und der ausgespülten Beschichtungsmittelreste, und/oder
d) Andrücken mit einem neuen Beschichtungsmittel in der Reinigungsvorrichtung (12), vorzugsweise bis das neue Beschichtungsmittel mit einer definierten Menge aus der Düse (22) des Druckkopfs (9, 13, A, B) austritt.

## Claims

1. Coating device for coating components (1) with a coating agent, in particular for painting motor vehicle body components (1) with a paint, with
a) a multi-axis coating robot (3), in particular with
a1) serial robot kinematics (4-8),
a2) at least six or seven mobile robot axes; and/or
a3) a multi-axis robot hand axis (8), and with
b) a first printhead (9) with
b1) at least one nozzle (22) for delivering a coating agent jet of the coating agent from the nozzle onto the surface of the component (1) to be coated, and
b2) at least one printhead valve (20) for controlling the release of the coating agent through the nozzle (22),
b3) wherein the first printhead (9) is mounted on the coating robot (3) and is guided by the coating robot (3) over the surface of the component (1) to be coated,
d) a second printhead (B) which is mounted on said coating robot (3) in addition to said first printhead (A), said two printheads (A, B) each applying a designated coating agent to enable color change without printhead replacement,
e) a first coating agent circuit, which passes through the first printhead (A) so that the coating agent can circulate through the first printhead (A), **characterized in that**
f) a second coating agent circuit passes through the second printhead (B) so that the coating agent can circulate through the second printhead (B).

2. Coating device according to claim 1,
**characterized in that**
a) said first printhead (A) is capable of applying coating agent while said second printhead (B) is flushed with a rinsing agent, and
b) said second printhead (B) is capable of applying coating agent while said first printhead (A) is flushed with said rinsing agent, and
c) **in that** the two printheads (A, B) are each rinsed alternately with the rinsing agent and apply coating agents.

3. Coating device according to any of claims 1 or 2, **characterised in that**
a) a separate printhead (A, B) is each attached to the coating robot (3) for each coating agent to be applied, so that the printheads are each only flowed through by the associated coating agent, and/or
b) **in that** the number of printheads (A, B) mounted on the coating robot (3) is greater than 2, or and/or
c) **in that** the number of printheads (A, B) mounted on the coating robot (3) is smaller than 6, and/or
d) **in that** the individual printheads (A, B) are each connected to a separate coating agent supply line, so that only the associated coating agent flows through the coating agent supply lines in each case.

4. Coating device in accordance with one of claims 1 to 3, **characterized in that**
a) **in that** the number of printheads (A, B) mounted on the coating robot (3) is greater than 2, 4, 6, 10, 20 and less than 30, 40 or 50 and/or
b) **in that** the individual printheads (A, B) are each connected to a separate coating agent supply line, so that only the associated coating agent flows through the coating agent supply lines in each case.

5. Coating device according to one of the preceding claims, **characterized by** a time control for time-controlled flushing of the first printhead (9, 13, A, B) and/or the second printhead (9, 13, A, B) with a rinsing agent.

6. Coating device according to claim 5,
**characterized in that**
a) the time control triggers a rinsing operation of the first printhead (9, 13, A, B) and/or of the second printhead after a predetermined rinsing interval has expired, in particular after a rinsing interval of 1h, 2h or 4h, and/or
b) **in that** the time control triggers a rinsing process of the first printhead (9, 13, A, B) and/or of the second printhead (9, 13, A, B) after a predetermined standstill period of a conveyor conveying the components (1) to be coated has elapsed, in particular after a standstill period of more than 10 minutes, 20 minutes, 30 minutes or 1 hour.

7. Coating device according to one of the preceding claims, **characterized in that**
a) a cleaning device (12) is provided for cleaning the first printhead (9, 13, A, B) and/or the second printhead (9, 13, A, B), and/or
b) **in that** the cleaning device (12) is arranged in a stationary manner separately from the coating robot (3), and/or
c) that the coating robot (3) can introduce the first and/or the second printhead (9, 13, A, B) into the cleaning device (12) to clean the first and/or the second printhead in the cleaning device.

8. Coating device in accordance with one of the preceding claims, **characterized in that**
a) the first and/or second printhead (9, 13, A, B) emits a narrowly limited jet of coating agent in contrast to a spray mist, and/or
b) **in that** the first and/or second printhead (9, 13, A, B) emits a droplet jet as opposed to a coating agent jet which is connected in the longitudinal direction of the jet, or
c) **in that** the first and/or second printhead (9, 13, A, B) emits a coating agent jet which is connected together in the longitudinal direction of the jet, in contrast to a droplet jet, and/or
d) that the coating agent pressure is controlled with a maximum variation of 500mbar, 200mbar, 100mbar, 50mbar; and/or
e) **in that** the first and/or second printhead (9, 13, A, B) has an application efficiency of at least 80%, 90%, 95% or 99% so that substantially all of the applied coating agent is completely deposited on the component (1) without overspray, and/or
f) that the first and/or second printhead (9, 13, A, B) has an area coating capacity of at least 0.5 m²/min, 1m²/min, 2m²/min or at least 3m²/min, and/or
g) **in that** the volume flow of the applied coating agent and thus the exit velocity of the coating agent is set in such a way that the coating agent does not bounce off the component (1) after it hits the component (1), and/or
h) that the exit velocity of the coating agent from the first and/or second printhead (9, 13, A, B) is at least 5 m/s, 7 m/s or 10 m/s, and/or
i) the exit velocity of the coating agent from the first and/or second printhead (9, 13, A, B) is not more than 30 m/s, 20 m/s or 10 m/s; and/or
j) that the application distance is at least 4 mm, 10 mm or 40 mm and/or; and/or
k) that the application distance is not more than 200 mm or 100 mm; and/or
l) that the coating agent is a paint, in particular a base coat, a clear coat, an effect paint, a mica paint or a metallic paint, and/or
m) that the coating is a water-based or solvent-based paint; and/or
n) **in that** the first and/or second printhead (9, 13, A, B) has at least one electrically controllable actuator in order to eject drops of the coating agent from the first or second printhead (9, 13, A, B), in particular a magnetic actuator or a piezo actuator.

9. Coating process for coating components (1) with a coating agent, in particular for painting motor vehicle body components (1) with a paint, by means of a coating device according to one of the preceding claims, having the following steps:
a) moving a first printhead (9) with at least one nozzle (22) and an associated printhead valve (20) by means of a multi-axis coating robot (3) over a surface of the component (1) to be coated, and
b) discharging a coating agent jet of a first coating agent through the nozzle (22) of the first printhead (9) onto the surface of the component (1) to be coated,
d) color change with switching coating agent delivery from said first printhead (A) to a second printhead (B) mounted on the same coating robot (3) for subsequent delivery of a coating agent jet of a second coating agent through said second printhead (B).

10. Coating process according to claim 9, **characterized by** the following steps:
a) said first printhead (A) applies coating agent while said second printhead (B) is rinsed with a rinsing agent, and
b) in that the second printhead (B) applies coating agent while the first printhead (A) is rinsed with a rinsing agent.

11. Coating process according to any of claims 9 to 10, **characterized by** the following steps:
a) applying said first coating agent through said first printhead (A) while circulating said second coating agent through said second printhead (B) with closed printhead valves (20) of said second printhead (B); and
b) applying the second coating agent through the second printhead (B) while the first coating agent circulates through the first printhead with the printhead valves (20) of the first printhead (A) being closed.

12. Coating process according to any one of claims 9 to 11, **characterized by** the following steps during a color change from a solvent-based paint to a water-based paint:
a) rinsing the first or second printhead with a solvent rinsing agent,
b) optionally, rinsing the first or second printhead with a solvent, especially alcohol,
c) rinsing said first or second printhead with a water-based rinsing agent.

13. Coating process according to any of claims 9 to 12, **characterized by** the following steps during a color change:
a) Sequential rinsing of the first or second printhead (9, 13, A, B) with different rinsing agents, in particular with an increasing content of organic solvent, and/or
b) rinsing the first or second printhead (9, 13, A, B) with a universal rinsing agent both for rinsing out water-based paint and for rinsing out solvent-based paint, and/or
c) rinsing the first or second printhead (9, 13, A, B) with a mixture of pulsed air, rinsing agent and/or aerosol, and/or
d) rinsing the first or second printhead (9, 13, A, B) with a VOC-free rinsing agent.

14. Coating process according to one of claims 9 to 13, **characterized by** the following steps during a color change:
a) inserting the first or second printhead (9, 13, A, B) into a cleaning device (12),
b) cleaning the first or second printhead (9, 13, A, B) in the cleaning device (12), in particular by
b1) rinsing the first or second printhead (9, 13, A, B) in the cleaning device (12) with a rinsing agent, and/or
b2) spraying the outer surfaces of the first or second printhead (9, 13, A, B) with a cleaning agent, and/or
c) collecting and disposing of the liquids applied in the cleaning device (12), in particular the rinsing agent, the cleaning liquid and the rinsed coating agent residues, and/or
d) pre-filling with a new coating agent in the cleaning device (12), preferably until the new coating agent emerges in a defined quantity from the nozzle (22) of the printhead (9, 13, A, B).

## Revendications

1. Dispositif de revêtement pour le revêtement de composants (1) avec un produit de revêtement, plus particulièrement pour la peinture de composants de carrosserie de véhicules automobiles (1) avec une peinture, avec
a) un robot de revêtement multiaxial (3), plus particulièrement avec
a1) une cinématique de robot en série (4-8),
a2) au moins six ou sept axes de robot mobiles et/ou
a3) un axe de main de robot multiaxial (8), ainsi qu'avec
b) une première tête d'impression (9) avec
b1) au moins une buse (22) pour l'émission d'un jet de produit de revêtement hors de la buse vers la surface du composant (1) à revêtir et
b2) au moins une soupape de tête d'impression (20) pour la commande de l'émission de produit de revêtement par la buse (22),
b3) dans lequel la première tête d'impression (9) est montée sur le robot de revêtement (3) et est guidée par le robot de revêtement (3) au-dessus de la surface du composant à revêtir (1),
d) une deuxième tête d'impression (B), qui est montée, en plus de la première tête d'impression (A), sur le robot de revêtement (3), dans lequel les deux têtes d'impression (A, B) appliquent chacun un produit de revêtement déterminé, afin de permettre un changement de couleur sans changement de tête d'impression,
e) un premier circuit de produit de revêtement qui s'étend à travers la première tête d'impression (A), de façon à ce que le produit de revêtement puisse circuler à travers la première tête d'impression (A), **caractérisé en ce que**
f) un deuxième circuit de produit de revêtement s'étend à travers la deuxième tête d'impression (B), de façon à ce que le produit de revêtement puisse circuler à travers la deuxième tête d'impression (B).

2. Dispositif de revêtement selon la revendication 1, **caractérisé en ce que**
a) la première tête d'impression (A) peut appliquer un produit de revêtement tandis que la deuxième tête d'impression (B) est rincée avec un produit de rinçage et
b) la deuxième tête d'impression (B) peut appliquer un produit de revêtement tandis que la première tête d'impression (A) est rincée avec le produit de rinçage et
c) les deux têtes d'impression (A, B) sont rincées avec le produit de rinçage et appliquent le produit de revêtement chacune en alternance.

3. Dispositif de revêtement selon l'une des revendications 1 ou 2, **caractérisé en ce que**
a) pour chaque produit de revêtement à appliquer, une tête d'impression (A, B) distincte est montée sur le robot de revêtement (3), de façon à ce que les têtes d'impression ne soient traversées chacune que par le produit de revêtement correspondant et/ou
b) le nombre de têtes d'impression (A, B) montées sur le robot de revêtement (3) est supérieur à 2 et/ou
c) le nombre de têtes d'impression (A, B) montées sur le robot de revêtement (3) est inférieur à 6 et/ou
d) les différentes têtes d'impression (A, B) sont raccordées chacune à une conduite d'alimentation en produit de revêtement distincte, de façon à ce que les conduites d'alimentation en produit de revêtement ne soient traversées chacune que par le produit de revêtement correspondant.

4. Dispositif de revêtement selon l'une des revendications 1 à 3, **caractérisé en ce que**
a) le nombre de têtes d'impression (A, B) montées sur le robot de revêtement (3) est supérieur à 2, 4, 6, 10, 20 et inférieur à 30, 40, ou 50 et/ou
b) les différentes têtes d'impression (A, B) sont raccordées chacune à une conduite d'alimentation en produit de revêtement distincte, de façon à ce que les conduites d'alimentation en produit de revêtement ne soient traversées chacune que par le produit de revêtement correspondant.

5. Dispositif de revêtement selon l'une des revendications précédentes, **caractérisé par** un contrôle temporel pour le rinçage contrôlé temporellement de la première tête d'impression (9, 13, A, B) et/ou de la deuxième tête d'impression (9, 13, A, B) avec un produit de rinçage.

6. Dispositif de revêtement selon la revendication 5,
**caractérisé en ce que**
a) le contrôle temporel déclenche, après l'écoulement d'un intervalle de rinçage prédéterminé, un processus de rinçage de la première tête d'impression (9, 13, A, B) et/ou de la deuxième tête d'impression, plus particulièrement après un intervalle de rinçage de 1 h, 2 h ou 4 h et/ou
b) le contrôle temporel déclenche, après l'écoulement d'une durée d'arrêt prédéterminée d'un convoyeur transportant les composants à revêtir (1), un processus de rinçage de la première tête d'impression (9, 13, A, B) et/ou de la deuxième tête d'impression (9, 13, A, B), plus particulièrement après une durée d'arrêt supérieure à 10 min, 20 min, 30 min ou 1 h.

7. Dispositif de revêtement selon l'une des revendications précédentes, **caractérisé en ce que**
a) pour le nettoyage de la première tête d'impression (9, 13, A, B) et/ou de la deuxième tête d'impression (9, 13, A, B), un dispositif de nettoyage (12) est prévu et
b) le dispositif de nettoyage (12) est disposé de manière fixe séparément du robot de revêtement (3) et
c) le robot de revêtement (3) peut introduire la première et/ou deuxième tête d'impression (9, 13, A, B) dans le dispositif de nettoyage (12) afin de nettoyer la première et/ou deuxième tête d'impression dans le dispositif de nettoyage (12).

8. Dispositif de revêtement selon l'une des revendications précédentes, **caractérisé en ce que**
a) la première et/ou deuxième tête d'impression (9, 13, A, B) émet un jet de produit de revêtement étroitement limité et non un brouillard de pulvérisation et/ou
b) la première et/ou deuxième tête d'impression (9, 13, A, B) émet un jet de gouttelettes et non un jet de produit de revêtement cohérent dans la direction longitudinale du jet ou
c) la première et/ou deuxième tête d'impression (9, 13, A, B) émet un jet de produit de revêtement cohérent dans la direction longitudinale du jet et non un jet de gouttelettes et/ou
d) la pression du produit de revêtement est contrôlée avec une plage de variation de ±500 mbar, ±200 mbar, ±100 mbar, ±50 mbar et/ou
e) la première et/ou deuxième tête d'impression (9, 13, A, B) présente un rendement d'application d'au moins 80 %, 90 %, 95 % ou 99 %, de façon à ce que globalement l'ensemble du produit de revêtement appliqué se dépose entièrement sur le composant (1), sans excès de pulvérisation et/ou
f) la première et/ou deuxième tête d'impression (9, 13, A, B) présente une performance de revêtement de surface d'au moins 0,5 m²/min, 1 m²/min, 2 m²/min ou d'au moins 3 m²/min et/ou
g) le débit volumique du produit de revêtement appliqué et donc la vitesse de sortie du produit de revêtement est réglée de façon à ce que le produit de revêtement ne rebondisse pas sur le composant (1) après son arrivée sur le composant (1) et/ou
h) la vitesse de sortie du produit de revêtement hors de la première et/ou deuxième tête d'impression (9, 13, A, B) est d'au moins 5 m/s, 7 m/s ou 10 m/s et/ou
i) la vitesse de sortie du produit de revêtement hors de la première et/ou deuxième tête d'impression (9, 13, A, B) est au maximum de 30 m/s, 20 m/s ou 10 m/s et/ou
j) la distance d'application est d'au moins 4 mm, 10 mm ou 40 mm et/ou
k) la distance d'application est au maximum de 200 mm ou 100 mm et/ou
l) le produit de revêtement est une peinture, plus particulièrement une peinture de base, un vernis, une peinture à effet, une peinture au mica ou une peinture métallique et/ou
m) le produit de revêtement est une peinture à l'eau ou une peinture à base de solvants et/ou
n) la première et/ou deuxième tête d'impression (9, 13, A, B) comprend au moins un actionneur contrôlable électriquement afin d'expulser les gouttes de produit de revêtement hors de la première resp. deuxième tête d'impression (9, 13, A, B), plus particulièrement un actionneur magnétique ou un actionneur piézoélectrique.

9. Procédé de revêtement pour le revêtement de composants (1) avec un produit de revêtement, plus particulièrement pour la peinture de composants de carrosserie de véhicules automobiles (1) avec une peinture, au moyen d'un dispositif de revêtement selon l'une des revendications précédentes, avec les étapes suivantes :
a) déplacement d'une première tête d'impression (9) avec au moins une buse (22) et une soupape de tête d'impression (20) correspondante au moyen d'un robot de revêtement multiaxial (3) au-dessus d'une surface du composant à revêtir (1) et
b) émission d'un jet de produit de revêtement d'un premier produit de revêtement à travers la buse (22) de la première tête d'impression (9) sur la surface du composant à revêtir (1),
d) changement de couleur avec une commutation de l'émission de produit de revêtement de la première tête d'impression (A) vers une deuxième tête d'impression (B), qui est montée sur le même robot de revêtement (3), pour l'émission suivante d'un jet de produit de revêtement d'un deuxième produit de revêtement par la deuxième tête d'impression (B).

10. Procédé de revêtement selon la revendication 9, **caractérisé par** les étapes suivantes :
a) la première tête d'impression (A) applique un produit de revêtement tandis que la deuxième tête d'impression (B) est rincée avec un produit de rinçage et
b) la deuxième tête d'impression (B) applique un produit de revêtement tandis que la première tête d'impression (A) est rincée avec un produit de rinçage.

11. Procédé de revêtement selon l'une des revendications 9 à 10, **caractérisé par** les étapes suivantes :
a) application du premier produit de revêtement par la première tête d'impression (A), tandis que le deuxième produit de revêtement circule à travers la deuxième tête d'impression (B) lorsque les soupapes de tête d'impression (20) de la deuxième tête d'impression (B) sont fermées et
b) application du deuxième produit de revêtement par la deuxième tête d'impression (B), tandis que le premier produit de revêtement circule à travers la première tête d'impression lorsque les soupapes de tête d'impression (20) de la première tête d'impression (A) sont fermées.

12. Procédé de revêtement selon l'une des revendications 9 à 11, **caractérisé par** les étapes suivantes lors d'un changement de couleur entre une peinture à base de solvants et une peinture à l'eau :
a) rinçage de la première ou deuxième tête d'impression avec un produit de rinçage de solvants,
b) rinçage optionnel de la première ou deuxième tête d'impression avec un produit de séparation, plus particulièrement avec de l'alcool,
c) rinçage de la première ou deuxième tête d'impression avec un produit de rinçage à base d'eau.

13. Procédé de revêtement selon l'une des revendications 9 à 12, **caractérisé par** les étapes suivantes lors d'un changement de couleur :
a) rinçage séquentiel de la première ou deuxième tête d'impression (9, 13, A, B) avec différents produits de rinçage, plus particulièrement avec une teneur croissante en solvants organiques et/ou
b) rinçage de la première ou deuxième tête d'impression (9, 13, A, B) avec un produit de rinçage universel, aussi bien pour la pulvérisation d'une peinture à base d'eau que pour la pulvérisation d'une peinture à base de solvants et/ou
c) rinçage de la première ou deuxième tête d'impression (9, 13, A, B) avec un mélange d'air pulsé, de produit de rinçage et/ou d'un aérosol et/ou
d) rinçage de la première ou deuxième tête d'impression (9, 13, A, B) avec un produit de rinçage exempt de COV.

14. Procédé de revêtement selon l'une des revendications 9 à 12, **caractérisé par** les étapes suivantes lors d'un changement de couleur :
a) introduction de la première ou deuxième tête d'impression (9, 13, A, B) dans un dispositif de nettoyage (12),
b) nettoyage de la première ou deuxième tête d'impression (9, 13, A, B) dans le dispositif de nettoyage (12), plus particulièrement par
b1) rinçage de la première ou deuxième tête d'impression (9, 13, A, B) dans le dispositif de nettoyage (12) avec un produit de rinçage et/ou
b2) pulvérisation des surfaces externes de la première ou deuxième tête d'impression (9, 13, A, B) avec un produit de nettoyage et/ou
c) collecte et élimination des liquides extraits dans le dispositif de nettoyage (12), plus particulièrement du produit de rinçage, du liquide de nettoyage et des résidus de produit de revêtement extraits et/ou
d) remise en pression avec un nouveau produit de revêtement dans le dispositif de nettoyage (12), de préférence jusqu'à ce que le nouveau produit de revêtement sorte avec une quantité définie hors de la buse (22) de la tête d'impression (9, 13, A, B).
